# EUROPÄISCHE PATENTSCHRIFT

(11) **EP 3 286 118 B1**
(45) Veröffentlichungstag und Bekanntmachung des Hinweises auf die Patenterteilung: **20.03.2019**
(21) Anmeldenummer: 16712801.6
(22) Anmeldetag: 23.03.2016
(51) Int. Cl.: B65G 47/86, B67C 7/00, B67C 3/24

(54) **BEHÄLTERGREIFER SOWIE TRANSPORTVORRICHTUNG ZUM TRANSPORTIEREN VON BEHÄLTERN**
CONTAINER GRIPPER AND TRANSPORTING DEVICE FOR TRANSPORTING CONTAINERS
PRÉHENSEUR À RÉCIPIENT ET DISPOSITIF DE TRANSPORT POUR TRANSPORTER DES RÉCIPIENTS

(30) Priorität: 21.04.2015 DE 102015106103
(43) Veröffentlichungstag der Anmeldung: 28.02.2018
(73) Patentinhaber: KHS GmbH, 44143 Dortmund (DE)
(72) Erfinder: FAHLDIECK, Andreas, 55743 Idar-Oberstein (DE); MALLITZKI, Nils, 55469 Simmern (DE)
(86) Internationale Anmeldenummer: PCT/EP2016/056347
(87) Internationale Veröffentlichungsnummer: WO 2016/169717

(56) Entgegenhaltungen:
- WO-A1-2009/135597
- DE-U1-202006 018 379
- US-A- 3 155 228
- US-A- 4 055 943
- US-A- 4 232 780
- US-A1- 2014 318 079

## Beschreibung

Die Erfindung bezieht sich auf einen Behältergreifer gemäß Oberbegriff Patentanspruch 1 sowie auch auf eine Transportvorrichtung zum Transportieren von Behältern gemäß Oberbegriff Patentanspruch 11, und zwar insbesondere auch zum Greifen, Halten und Transportieren von Behältern in Form von Flaschen, bevorzugt von PET-Flaschen.

Ein Behältergreifer ist Gegenstand der älteren, aber nicht vorveröffentlichten deutschen Patentanmeldung DE 10 2014 117358. Bei diesem Behältergreifer sind die beiden Greiferarme durch an diesen Armen vorgesehene Federzungen oder Federarme in ihre Schließstellung mit einer Schließkraft vorgespannt, wofür sich die Federarme ihrerseits gegen ein Sperrelement abstützen. Dieses ist relativ zu den Federarmen derart bewegbar, dass die freien Enden der Federarme in einer Stellung des Sperrelementes, die einem freigebenden Zustand mit reduzierter Schließkraft entspricht, einen kleineren Abstand voneinander aufweisen als in einer zweiten Stellung des Sperrelementes, in der durch Vergrößerung dieses Abstandes eine Erhöhung der Schließkraft des Behältergreifers erreicht ist und die somit einem sperrenden Zustand des Behältergreifers entspricht.

Bekannt sind weiterhin Behältergreifer (DE 10 2005 014 838 A1), bei denen die Schließkraft dadurch erreicht wird, dass die Greiferarme einstückig mit rückwärtigen, federelastischen Verlängerungen ausgebildet sind. Dies hat u.a. den Nachteil, dass die Werkstoffauswahl für die Herstellung der Greiferarme stark eingeschränkt ist. Das jeweilige Steuer- oder Sperrelement ist ein Exzenter, gegen den sich die federelastischen rückwärtigen Verlängerungen der Greiferarme abstützen und der zur Steuerung zwischen dem sperrenden Zustand mit erhöhter Schließkraft und dem freigebenden Zustand mit reduzierter Schließkraft um eine Achse parallel zur Schwenkachse der Greiferarme gedreht werden muss.

Bekannt ist auch eine Transportvorrichtung 1, 1a (DE 10 2012 011 367 A1), die an einem um eine Maschinenachse umlaufend antreibbaren Transportelement mehrere Behältergreifer mit jeweils zwei durch Federkraft ihre Schließstellung vorspannte Greiferarme aufweist.

Jedem Behältergreifer ist ein Verschließelement zugeordnet, welches zum Sperren der Greiferarme kurvengesteuert, radial zur Maschinenachse und gegen die Wirkung einer Rückstellfeder in eine Schließposition bewegbar ist, in der das Verschließelement die beiden Greiferarme reiterartig übergreift und diese dadurch gegen ein Öffnen, d.h. gegen ein Auseinander-Bewegen sperrt. Es erfolgt also ein tatsächliches formschlüssiges Sperren der Greiferarme durch das Verschließelement.

Bekannt sind auch Behältergreifer (DE 297 13 510 U), bei denen an einer Tragplatte schwenkbar gelagerte Greiferarme vorgesehen sind, die durch eine Druckfeder in eine Schließstellung vorgespannt sind. Die Behälter können dabei über Eintrittsschrägen an den Vorderseiten der Greiferarme unter Zusammendrücken der Feder in eine von den Greiferarmen und zwischen diesen gebildete Behälteraufnahme eingeschoben und umgekehrt aus dieser Behälteraufnahme wieder ausgezogen werden.

Bekannt ist weiterhin ein Behältergreifer (EP 2 279 143 A1), dessen Greiferarme kostengünstig, einfach und sogar werkzeuglos auswechselbar sind. Dies wird dadurch erreicht, dass zwischen Lagerenden der Greiferarme ein Fixierelement positioniert ist, wobei die Lagerenden eine Randausnehmung aufweisen. Durch Schwenken der Greiferarme in eine extreme Öffnungslage und durch vorheriges Entspannen einer die Schließkraft der Greiferarme erzeugenden Zugfeder werden die Greiferarme aus der Fixierung gelöst, so dass sie leicht und werkzeuglos abnehmbar sind. Weiterhin weist ein Tragkörper zum Befestigen des jeweiligen Behältergreifers am Transportelement verformbare Montagelaschen aus einem elastischen Material auf.

Weiterhin ist aus der DE 20 2006 018 379 U1 ein Greifer nach dem Oberbegriff des Anspruchs 1 bekannt, der zwei Greifarmen aufweist, mit je einem Greifende und einem Betätigungsende. Dabei ist ein drehverstellbarer, eine Anschlagflache des Greifers beaufschlagender Steuernocken vorgesehen, wobei ein die Anschlagflache kontaktierender Bereich des Steuernockens radial zu dessen Drehachse elastisch nachgiebig ist.

Aus der US 3,155,228 ist ebenfalls ein Greifer bekannt, bei welchem eine querliegende Blattfeder auf die innen liegenden Greiferenden im geöffneten Zustand einwirkt und eine sperrende Wirkung hat. Schließlich ist aus der WO 2009/135597 A1 ein aktiver Greifer für Flaschen bekannt, wobei auf einer in der Gebrauchslage vertikal positionierten Führung ein das Öffnen und Schließen der Greifarme bewirkender Schubkörper vorgesehen ist, der in Heb- und Senkrichtung von wenigstens einer vertikal ausgericheten Spiralfeder beaufschlagt ist und dessen Bewegung über eine Steuerkurve mit Rollrad bewirkt wird.

Aufgabe der Erfindung ist es, einen Behältergreifer aufzuzeigen, der bei vereinfachter konstruktiver Ausbildung insbesondere auch eine vereinfachte Steuerung zwischen dem sperrenden und dem frei gebenden Zustand ermöglicht. Zur Lösung dieser Aufgabe ist ein Behältergreifer entsprechend dem Patentanspruch 1 ausgebildet. Eine Transportvorrichtung zum Transportieren von Behältern ist Gegenstand des Patentanspruchs 11.

"Freigebender Zustand" bedeutet im Sinne der vorliegenden Erfindung also denjenigen Zustand Behältergreifers, in dem die Greiferarme durch die Federkraft der Federelemente in ihre Schließstellung nur so stark vorgespannt sind, dass eine sichere Übergabe der Behälter an die Behältergreifer sowie auch eine sichere Abgabe der Behälter von den Behältergreifern jeweils durch Auseinanderbewegen der Greiferarme gegen die Feder- oder Schließkraft möglich ist. Das Sperrelement befindet sich dabei in seiner freigebenden Position.

"Sperrender Zustand" bedeutet im Sinne der Erfindung denjenigen Zustand des Behältergreifers, in dem die Greiferarme des betreffenden Behältergreifers mit einer gegenüber dem freigegebenen Zustand erhöhten Feder- oder Schließkraft in ihre Schließstellung vorgespannt sind. Ein tatsächliches formschlüssiges Sperren erfolgt hierbei aber grundsätzlich nicht. Das Sperrelement befindet sich dabei in seiner sperrenden Position.

Der erfindungsgemäße Behältergreifer ist bevorzugt für eine hängende Halterung der Behälter an einen die Behälteröffnung bildenden Behälterhals und/oder an einem dortigen Ring oder Flansch (Neckring) ausgebildet.

"Behälter" sind im Sinne der Erfindung insbesondere Dosen, Flaschen, Fässer, auch KEGs, jeweils aus Metall, Glas und/oder Kunststoff, vorzugsweise aus PET (Polyethylenterephthalat).

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

In Weiterbildung der Erfindung ist der Behältergreifer beispielsweise so ausgeführt, dass das Sperrelement in einer Achsrichtung radial oder im Wesentlichen radial zu einer Schwenkachse der Greiferarme und/oder radial oder im Wesentlichen radial zu einer Maschinenachse zwischen der wenigstens einen freigebenden und der wenigstens einen sperrenden Position bewegbar ist,
oder
dass das Sperrelement wenigstens zwei Federelemente aufweist,
oder
dass das Sperrelement mit seinen Federelementen in einem Raum zwischen einander zugewandten Steuerflächen der Greiferarme angeordnet und bewegbar ist,
oder
dass das Federelement eine Federzunge oder ein Federarm ist,
oder
dass die Federzunge oder der Federarm an einem Ende gehalten und am anderen Ende frei ist,
oder
dass das Federelement oder die Federzunge oder der Federarm in Bewegungsrichtung des Sperrelementes einen konstanten oder im Wesentlichen konstanten oder einen sich in Bewegungsrichtung des Sperrelementes ändernden Querschnitt aufweist,
oder
der jeweilige Federarm so angeordnet ist, dass er in unterschiedlichen Positionen des Sperrelementes unterschiedlich stark elastisch verformt wird,
oder
dass der Federarm im entspannten Zustand geradlinig oder im Wesentlichen geradlinig oder zumindest auf einer Teillänge gekrümmt ausgebildet ist,
oder
dass zumindest eine Teillänge des jeweiligen Federarms mit der Achsrichtung der Schiebebewegung des Sperrelementes einen Winkel einschließt bzw. sich schräg zu der Achsrichtung der Schiebebewegung erstreckt
oder
dass das Sperrelement einstückig mit seinen Federelementen aus einem metallischen Werkstoff, beispielsweise Federstahl, oder aus Kunststoff gefertigt ist,
oder
dass das Sperrelement U-Profilartig mit einer Basis und zwei über eine gemeinsame Seite der Basis wegstehenden abgewinkelten Schenkeln ausgeführt ist, und dass an jedem Schenkel wenigstens ein sich von diesem weg erstreckender Federarm vorgesehen ist,
oder
dass das Sperrelement an einer Basis einen pfostenartig weg stehenden Abschnitt aufweist, von dem sich die Federarme weg erstrecken,
oder
dass das Sperrelement mit seiner Basis und/oder mit seinen Schenkeln an dem Transportelement oder an einem am Transportelement vorgesehenen Träger geführt ist, beispielsweise in wenigstens einem Führungsschlitz,
oder
dass die Greiferarme doppelschenkelartig ausgebildet sind und jeder Greiferarm zwischen seinen beiden Enden schwenkbar gelagert ist, dass die Greiferarme an jeweils einem Ende eine Behälteraufnahme bilden und am anderen Ende die Steuerfläche aufweisen,
oder
dass die beiden an einem Lagerelement oder an einer Aufnahme schwenkbar gelagerten Greiferarme zusammen mit diesem Lagerelement oder mit dieser Aufnahme eine Bau- oder Greifereinheit bilden, die vorzugsweise durch Verrasten im Transportelement oder an einem dort vorgesehenen Träger austauschbar befestigbar ist,
oder
dass zur Steuerung des Bewegung des Sperrelementes an diesem ein mit einer Steuerkurve zusammenwirkender Mitnehmer, vorzugsweise in Form einer Kurvenrolle vorgesehen ist, wobei beispielsweise ein Lagerbolzen der Kurvenrolle in einem Lagerabschnitt des Sperrelementes magnetisch gehalten ist, z.B. durch wenigstens einen dort vorgesehenen Permanentmagneten,
wobei die vorstehend genannten Merkmale jeweils einzeln oder in beliebiger Kombination verwendet sein können.

Unabhängig von der jeweiligen Ausbildung im Detail ergibt sich für den erfindungsgemäßen Behältergreifer eine Vielzahl von Vorteilen. So können der Behältergreifer und dessen Greifereinheit insbesondere im entsperrten oder freigebenden Zustand seitlich federnd ausweichen und dadurch u.a. auch eventuelle Teilungsverzüge, d.h. Abweichungen im Teilungsabstand von Behältergreifern oder Behälteraufnahmen sowie Toleranzen hinsichtlich der Synchronität von Behältertransportelementen ausgleichen, die aneinander anschließen.

Für eine sichere Übergabe von Behältern zwischen Transportelementen und/oder Transportsternen ist es insbesondere auch bei Rinsern, Füllern oder Verschließern wichtig, dass die an den Behältergreifern eines Transportelementes gehaltenen Behälter möglichst exakt den vorgegebenen Teilungsabstand voneinander aufweisen, was automatisch dann erreicht ist, wenn sich das jeweilige Sperrelement in der den betreffenden Behältergreifer sperrenden Position befindet.

Bei einem eventuellen Crash, z.B. bei einer eventuellen fehlerhaften Übergabe oder Abnahme der Behälter an einen Behältergreifer bzw. von einem Behältergreifer kann die betreffende, die Greiferarme aufweisende Greifereinheit problemlos aus dem umlaufenden Transportelement ausrasten, ohne dass Teile des betreffenden Greifers beschädigt werden. Ebenso einfach kann die Funktion des betreffenden Behältergreifers wieder hergestellt werden, beispielsweise dadurch, dass das Sperrelement zunächst in eine Position geschoben wird, in der die Federarme des Sperrelementes außer Eingriff mit den Greiferarmen sind, und dass anschließend das Sperrelement unter z.B. manuellem Zusammendrücken seiner Federarme mit diesen Federarmen zwischen die Greiferarme bzw. zwischen die an diesen Greiferarmen vorgesehenen Anlage- oder Steuerbereiche bewegt wird, so dass die Federarme dann wieder auf die Greiferarme zur Erzeugung der Schließkraft einwirken.

Gesteuert wird die Bewegung der Sperrelemente der Behältergreifer zwischen dem sperrenden und dem freigebenden Zustand bevorzugt über jeweils einen mit wenigstens einer Steuerkurve zusammenwirkenden Mitnehmer oder über eine entsprechende Kurvenrolle. Hierbei ist der erfindungsgemäße Behältergreifer vorzugsweise so ausgebildet, dass die jeweils mit einem Abschnitt der Steuerkurve erreichte Position des Sperrelementes und damit der entsprechende Zustand des Behältergreifers auch ohne Steuerkurve aufrecht erhalten bleibt, und zwar insbesondere auch der gesperrte Zustand des Behältergreifers, und zwar solange bis ein weiterer Abschnitt der Steuerkurve auf das Sperrelement einwirkt. Hierdurch sind kurze Steuerkurven möglich, die den konstruktiven Aufwand, den Verschleiß und die Herstellungskosten reduzieren sowie die Reinigung der entsprechenden Transportvorrichtung oder Behälterbehandlungsmaschine erleichtern.

Der erfindungsgemäße Behältergreifer gestattet weiterhin einen werkzeuglosen, einfachen sowie schnellen Austausch seiner Funktionselemente, insbesondere auch gesamter Baugruppen und Verschleißteile. Weiterhin ermöglicht der erfindungsgemäße Behältergreifer die Realisierung von Transportelementen mit kleinem Teilkreisdurchmesser, beispielsweise mit einem Teilkreisdurchmesser von nur 540 mm und mit kleiner Teilung (Abstand der Greifer untereinander auf dem Umfang), beispielsweise bei einer Teilung von 3 π (3 mal PI). Dies entspricht 18 Behältergreifer bei vorgenanntem Teilkreisdurchmesser von 540mm.

Durch die sichere Sperrwirkung können sowohl gefüllte Behälter als auch solche mit nur kleinen Neckringen oder schwach ausgeprägten Sicherungsring-Nuten sicher gehalten werden. So kann beispielsweise der Neckring in seinen Dimensionen reduziert, also dünner oder auch schmaler gestaltet sein, was zur Kosteneinsparung allgemein gewünscht ist.

Der erfindungsgemäße Behälterträger ermöglicht durch seine offene Konstruktion, leichte Montier- und Demontierbarkeit seiner Funktionselemente eine optimale Reinigung. Zusätzlich zu dem jeweiligen Sperrelement sind keine weiteren Federelemente erforderlich.

Der Behältergreifer ist sehr schnell zwischen seinem sperrenden und frei gebenden Zustand schaltbar, so dass er für hohe Leistungen (Anzahl der je Zeiteinheit transportierten Behälter) geeignet ist, zumal nur kurze Bewegungshübe für das Sperrelement erforderlich sind.

Weiterhin sind für die gesteuerte Bewegung des Sperrelementes nur geringe Steuerkräfte erforderlich, wodurch sich ein reduzierter Verschleiß und eine reduzierte Geräuschentwicklung in vorteilhafter Weise ergeben. Das schnelle Schalten des Behältergreifers wird auch dadurch begünstigt, dass das jeweilige Sperrelement nur eine geringe Masse aufweist und für das Sperrelement wie beschrieben nur ein kurzer Bewegungshub erforderlich ist.

Bevorzugt befinden sich sämtliche Funktionselemente des erfindungsgemäßen Behältergreifers, und dabei insbesondere das Sperrelement und die mit dem Sperrelement zusammenwirkenden Steuerflächen der Greiferarme unterhalb der Greiferarme, wodurch in vorteilhafter Weise eine evtl. Kontamination des an dem Behältergreifer gehaltenen, beispielsweise noch offenen Behälters mit Keimen vermieden wird.

Der erfindungsgemäße Behältergreifer eignet sich für den Einsatz bei Transportelementen oder Transportvorrichtungen ganz allgemein, wobei diese Transportvorrichtungen dann beispielsweise Teil einer Transportstrecke mit mehreren in einer Behältertransportrichtung aufeinanderfolgenden Transportvorrichtungen, Teil eines Rinsers, eines Füllers, eines Verschließers und/oder einer Etikettiermaschine sind, beispielsweise Teil eines umlaufenden Transportelementes am Behältereinlauf und/oder am Behälterauslauf der entsprechenden Maschine.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: in Draufsicht und in Teildarstellung zwei Behältergreifer gemäß der Erfindung, zusammen mit einem an einem Greifer gehaltenen Behälter;
- Fig. 2: in perspektivischer Darstellung eine Unteransicht der Fig. 1;
- Fig. 3: in perspektivischer Einzeldarstellung ein federndes Sperrelement des Behältergreifers der Fig. 1 und 2;
- Fig. 4: in perspektivischer Darstellung eine Draufsicht des Behältergreifers der Figuren 1 - 3, wobei die Lagerung der Greifeinheit derart angeordnet ist, dass die Federspangen unten sind;
- Fig. 5: in Draufsicht einen Behältergreifer gemäß einer weiteren bevorzugten Ausführungsform der Erfindung, zusammen mit einem von diesem Greifer gehaltenen Behälter;
- Fig. 6: in perspektivischer Darstellung einen Längsschnitt durch den Behältergreifer der Fig. 5.;
- Fig. 7: der Behältergreifer der Figuren 5 und 6 in perspektivischer Darstellung und in Ansicht von unten (analog zur Figur 4) und
- Fig. 8: eine Draufsicht auf den Behältergreifer der Figur 7 in ausgerasteter Stellung, z.B. nach einer Überlastung bzw. einer Kollision.

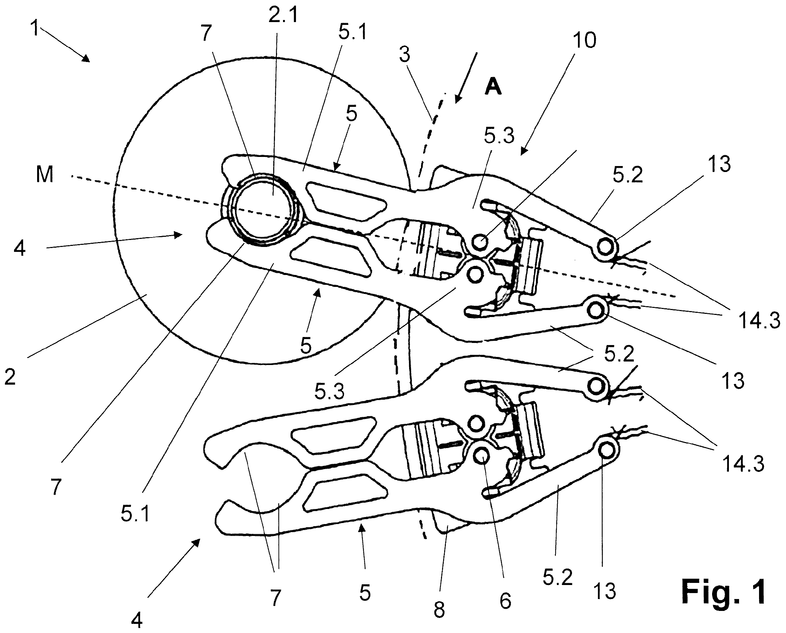

In den Figuren 1 - 4 ist 1 allgemein eine Transportvorrichtung 1 zum Transportieren von Behältern 2, die in den Figuren als großvolumige Flaschen und dabei speziell als Flaschen aus PET dargestellt sind. Die Transportvorrichtung 1 besteht in bekannter Weise u.a. aus einem um eine vertikale Maschinenachse MA umlaufend antreibbaren Rotor oder Transportelement 3, welches in den Figuren durch eine unterbrochene Linie angedeutet ist. Am Umfang des Transportelementes 3 sind in gleichmäßigen Winkelabständen um die Maschinenachse MA gegeneinander versetzt Behälterträger in Form von Behältergreifern 4 vorgesehen, und zwar für eine hängende Halterung jeweils eines Behälters 2 an seinem Behälterhals (Neck) bzw. an einem unterhalb der Behälteröffnung 2.1 an dem Behälterhals ausgebildeten Behälterflansch 2.2.

Jeder Behälterträger 4 umfasst u.a. zwei Greiferarme 5, die bei der dargestellten Ausführungsform doppelhebelartig oder doppelschenkelartig ausgebildet sind, und zwar mit einem bezogen auf die Maschinenachse MA radial außen liegenden Greiferarmabschnitte 5.1 und mit einem bezogen auf die Maschinenachse MA gegenüber dem Greiferarmabschnitt 5.1 radial weiter innen liegenden Greiferarmabschnitt 5.2. zwischen den beiden Greiferarmabschnitten 5.1 und 5.2 sind die Greiferarme 5 an jeweils einem Gelenkbolzen 6 um eine Achse parallel oder im Wesentlichen parallel zur Maschinenachse MA schwenkbar gelagert, und zwar für ein gegensinniges Auseinanderschwenken der Greiferarmabschnitte 5.1 zum Öffnen des betreffenden Behältergreifers 4 sowie für ein gegensinniges Aufeinander-ZuSchwenken oder Zusammenschwenken der Greiferarmabschnitte 5.1 zum Schließen des Behältergreifers 4.

Wie die Figuren zeigen, sind die beiden Greiferarme 5 am Übergang zwischen ihren Greiferarmabschnitten 5.1 und 5.2 und an ihren einander zugewandten Seiten jeweils mit einem vorsprungartigen Greiferarmabschnitt 5.3 versehen, an dem der jeweilige Gelenkbolzen 6 vorgesehen ist.

An ihren bezogen auf die Maschinenachse MA radial außen liegenden Enden sind die Greiferarme 5 bzw. die Greiferarmabschnitte 5.1 jeweils mit einer Ausnehmung 7 versehen. Diese beiden Ausnehmungen 7 ergänzen sich zu einer Behälteraufnahme in der Weise, dass der jeweilige am Behältergreifer 4 gehaltene Behälter 2 von den beiden Greiferarmen 5 an seinem Behälterhals klammerartig umgriffen wird, idealerweise auf einem Winkelbereich größer als 180° umgriffen wird. Ebenso wie die Gelenkbolzen 6 sind auch die Greiferarme 5 jedes Behältergreifers 4 in Umfangs- oder Drehrichtung A des Transportelementes 3 sitzen einander gegenüber. Bei der dargestellten Ausführungsform sind die Greiferarme 5 an der Oberseite eines plattenförmigen, segmentartigen Trägers 8 vorgesehen, der seinerseits an der Oberseite des umlaufenden Transportelementes 3 mit geeigneten Befestigungsmitteln, beispielsweise durch Verschrauben befestigt sein kann, wobei dieser auch in geeigneter Weise einstückig ausgebildet sein könnte.

Wie die Figuren auch zeigen, sind die beiden, beispielsweise aus Kunststoff oder einem metallischen Werkstoff hergestellten Greiferarme 5 identisch ausgebildet, aber unter Wenden eines Greiferarms 5 um seine Längserstreckung so montiert, dass die beiden Greiferarme 5 jedes Behältergreifers 4 spiegelsymmetrisch zu einer gedachten, radial zur Maschinenachse MA orientierten und diese Maschinenachse MA einschließenden Mittelebene M ausgebildet sind. Weiterhin stehen die Greiferarme 5 mit ihren bezogen auf die Maschinenachse MA radial außen liegenden Enden über den Träger 8 sowie auch über den Umfang des Transportelementes 3 vor.

In einer nicht dargestellten Aufführungsform bestehen der Träger 8 und das Transportelement 3 aus einem einzigen Teil bzw. werden aus einem Bauteil gebildet.

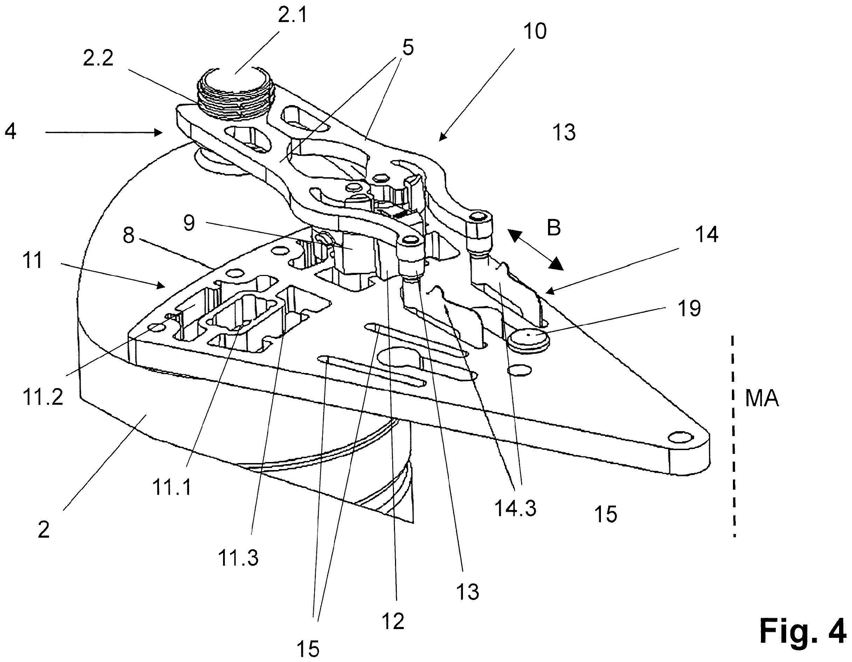

Die beiden Gelenkbolzen 6 sind in einem Lagerstück oder einer Aufnahme 9 gehalten und/oder gelagert, so dass die beiden Greiferarme 5 zusammen mit der Aufnahme 9 eine Baueinheit in Form einer Greifereinheit 10 bilden. Die Aufnahmen 9 und damit auch die Greifereinheiten 10 sind jeweils durch Verrasten an dem Träger 8 befestigt. Hierfür weist der Träger 8, der bei der dargestellten Ausführungsform für die Aufnahme von zwei Greifereinheiten 10 ausgebildet ist, entsprechend der Figur 4 für jede Greifereinheit 10 eine Anordnung 11 von mehreren Öffnungen auf, und zwar mit einer ersten Öffnung 11.1 und zwei weiteren Ausnehmungen oder Öffnungen 11.2 und 11.3, die an jeder Anordnung 11 beidseitig von der Ausnehmung 11.1 vorgesehen sind und zwar bezogen auf die Maschinenachse MA die Ausnehmung 11.2 gegenüber der Ausnehmung 11.1 radial nach außen versetzt und die Ausnehmung 11.3 bezogen auf die Ausnehmung 11.1 radial nach innen versetzt. Die beiden Ausnehmungen 11.2 und 11.3 dienen zum Verrasten von jeweils einem Flügel 12 eines vorzugsweise einstückig mit der jeweiligen Aufnahme 9 hergestellten Rastelementes am Träger 8, und zwar zum Verrasten der Flügel 12 im Bereich ihrer unteren, freien Enden an Rasten, die an den der Ausnehmung 11.1 entfernten Randflächen der Ausnehmungen 11.2 und 11.3 vorgesehen sind. Zum Verbinden der Greifereinheit 10 wird die Aufnahme 9 einseitig (hier von oben her) in die betreffende Anordnung 11 eingesetzt, so dass ein mittlerer, zwischen den beiden Flügeln 12 gebildeter und auch zur Lagerung der Gelenkbolzen 6 dienender Abschnitt der Aufnahme 9 in der Ausnehmung 11.1 zur Übertragung von Kräften und Momenten passend aufgenommen ist und die beiden Flügel 12 jeweils in eine Ausnehmung 11.2 bzw. 11.3 eingreifen und dort verrasten. Durch Zusammendrücken der Flügel 12 kann die Rastverbindung zwischen dem Träger 8 und der Greifereinheit 10 gelöst werden, so dass die Greifereinheit 10 dann vorliegend nach oben vom Träger 8 abgenommen werden kann, beispielsweise für einen Formatwechsel, d.h. für eine Umrüstung der Transportvorrichtung 1 auf Behälter 2 mit einem anderen Behälterhals-Durchmesser, für Reparatur- und/oder Reinigungszwecke usw. Die Ausnehmungen 11.1 - 11.3 sind jeweils langlochartig ausgeführt und mit ihrer Längserstreckung in Transportrichtung A orientiert.

An den freien Enden der Greiferarmabschnitte 5.2 ist jeweils ein Bolzen 13 vorgesehen, der mit seiner Bolzenachse parallel oder im Wesentlichen parallel zur Achse der Gelenkbolzen 6 orientiert ist. Die beiden Bolzen 13 befinden sich bei der dargestellten Ausführungsform an jedem Greiferarm 5 an dessen dem Träger 8 zugewandten Unterseite und bilden jeweils eine Angriffs- oder Steuerfläche für ein federndes Sperrelement 14, welches als Bestandteil des Behältergreifers 4 für jeden Behältergreifer 4 bzw. für jede Greifereinheit 10 gesondert vorgesehen ist. In der Praxis sind bei der dargestellten Ausführungsform also bei zwei an dem Träger 8 vorgesehenen Greifereinheiten 10 ebenfalls zwei federnde Sperrelemente 14 am Träger 8 verwendet. Vorliegend wurde vorteilhafterweise nur ein Sperrelement 14 verwendet, welches zwei Schenkeln 14.2 und zwei Federarmen 14.3 aufweist.

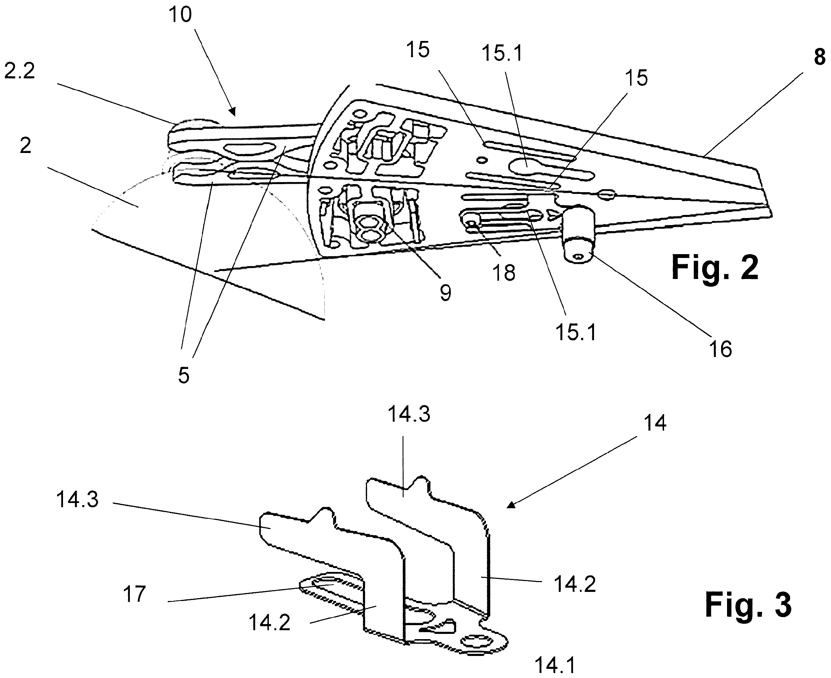

Die Fig. 3 zeigt das bei dieser Ausführungsform aus Federstahlblech durch Schneiden und/oder Stanzen sowie durch Biegen hergestellte Sperrelement 14 in Einzeldarstellung. Es ist im weitesten Sinne U-profilartig hergestellt, und zwar mit einer plattenartigen Basis 14.1 und mit zwei gegenüber der Basis 14.1 abgewinkelten und über dieselbe Oberflächenseite der Basis 14.1 wegstehenden Schenkeln 14.2, die an ihren der Basis 14.1 entfernt liegenden Ende jeweils in eine seitliche Verlängerung in Form einer Federzunge oder eines Federarms 14.3 übergehen. Im entspannten Zustand des Sperrelementes 14, d.h. vorliegend im Zustand mit einer geringeren Vorspannung, sind bei der dargestellten Ausführungsform die einseitig in derselben Richtung von den Schenkeln 14.2 wegstehenden, mit ihren Oberflächenseiten beispielsweise jeweils in einer gemeinsamen Ebene mit dem zugehörigen Schenkel 14.2 angeordneten und mit ihrer Längserstreckung parallel zu den Oberflächenseiten der Basis 14.1 orientierten Federarme 14.3 im Wesentlichen parallel zueinander angeordnet.

Das jeweilige Sperrelement 14 ist an dem Träger 8 derart montiert, dass die Basis 14.1 sich an der den Greiferarmen 5 abgewandten Unterseite des Trägers 8 befindet und dabei die den Schenkeln 14.2 zugewandte Oberflächenseite der Basis 14.1 dieser Unterseite benachbart liegt. Die Schenkel 14.2 reichen jeweils durch eine schlitzförmige Öffnung 15 hindurch, so dass die Federarme 14.3 sich mit ihren Oberflächenseiten in Ebenen parallel oder im Wesentlichen parallel zu den Achsen der Gelenkbolzen 6 sowie senkrecht oder im Wesentlichen senkrecht zur Ebene der Oberseite des Trägers 8 orientiert mit einem gewissen Abstand über die Oberseite des Trägers 8 vorstehen, und zwar derart, dass die dem jeweiligen Schenkel 14.2 entfernt liegenden freien Enden der Federarme 14.3 bezogen auf die Maschinenachse MA gegenüber diesen Schenkeln 14.2 radial nach außen versetzt sind. Die schlitzförmigen Öffnungen 15 sind mit ihrer Längserstreckung parallel oder im Wesentlichen parallel zur Mittelebene M orientiert und besitzen eine Länge, die ein Verschieben des Sperrelementes 14 radial zur Maschinenachse MA (Doppelpfeil B) zumindest um einem Bewegungshub ermöglicht, der der Schaltung des Sperrelementes 14 zwischen der freigebenden und sperrenden Position entspricht. Weiterhin ist die Anordnung so getroffen, dass die beiden Federarme 14.3 des Sperrelementes 14 im fertig montierten bzw. betriebsbreiten Zustand des Behältergreifers 4 in jeder Stellung dieses Bewegungshubes im Sinne eines reduzierten gegenseitigen Abstandes blattfederartig elastisch verformt zwischen den beiden Bolzen 13 aufgenommen sind, d.h. die Federarme 14.3 in jeder Stellung des Bewegungshubes mit Federkraft gegeneinander zugewandte Bereiche der Bolzen 13 anliegen und somit auf die Greiferarme 5 jeweils eine den Behältergreifer 4 schließende Schließkraft ausüben. Zur Veränderung dieser Schließkraft wird das jeweilige Sperrelement 14 radial zur Maschinenachse MA gesteuert verschoben, vorzugsweise kurvengesteuert über eine an der Basis 14.1 vorgesehene und um eine Achse parallel oder im Wesentlichen parallel zur Maschinenachse MA frei drehbare sowie über die Unterseite des Trägers 8 wegstehende Kurvenrolle 16. Diese wirkt mit wenigstens einer nicht dargestellten, mit dem Transportelement 3 nicht umlaufenden und für sämtliche Behältergreifer 4 der Transportvorrichtung 1 gemeinsamen Steuerkurve zusammen, die z.B. an einem Vorrichtungsgestell der Transportvorrichtung 1,1a vorgesehen ist. Zur Sicherung des Sperrelementes 14 an dem Träger 8 sowie zur Begrenzung des Bewegungshubes zwischen der freigebenden und sperrenden Position ist die Basis 14.1 mit einem Langloch 18 versehen, welches von einem in den Träger 8 eingreifenden Befestigungselement 18.1, beispielsweise von einer in ein Gewinde des Trägers 8 eingreifenden Schraube durchgriffen wird. Ein zur Lagerung der Kurvenrolle 16 dienendes Lagerstück reicht durch eine langloch- und zugleich schlüssellochartig ausgebildete weitere Öffnung 15.1, die zwischen den beiden Öffnungen 15 vorgesehen mit ihrer Längserstreckung radial zur Maschinenachse MA orientiert ist, an die Oberseite des Trägers 8 und ist dort mit einem Führungs- oder Gleitstück 19 versehen.

Befindet sich das Sperrelement 14 in einer Position, in der die beiden Federarme 14.3 eine große wirksame Länge aufweisen, d.h. die Bolzen 13 beispielsweise gegen die freien Enden der Federarme 14.3 anliegen, das Sperrelement 14 also bezogen auf die Maschinenachse MA radial nach innen in eine der Maschinenachse MA näher liegende Endstellung bewegt ist, so ergibt sich für den Behältergreifer 4, 4a bei reduzierter wirksamer Federkonstante bzw. Federkraft der Federarme 14.3 eine reduzierte Schließkraft. Die Schenkel 14.2 befinden sich dabei an den der Maschinenachse MA zugewandten Enden der Öffnungen 15 oder in der Nähe dieser Enden. Der Behältergreifer 4 befindet sich im freigebenden Zustand und das Sperrelement 14 in der freigebenden Position.

Zur Erhöhung der Schließkraft wird das Sperrelement 14 bezogen auf die Maschinenachse MA radial nach außen bewegt, so dass die wirksame Länge der Federarme 14.3, d.h. der Abstand derjenigen Federarmbereiche, gegen die die Bolzen 13 anliegen, von den Schenkeln 14.2 verkürzt wird Hierdurch erhöht sich die wirksame Federkraft oder Vorspannung, je nach Geometrie, mit der die Federarme 14.3 auf die Greiferarme 5 einwirken, und über das federnde Sperrelement 14 wird somit eine erhöhte Schließkraft auf die Greiferarme 5 ausgeübt.

Der Abstand, den die Schenkelabschnitte 14.2 und auch die Federarme 14.3 voneinander aufweisen, ist dabei größer als derjenige Abstand, den die einander zugewandten Seiten der Bolzen 13 voneinander besitzen. Durch die schlitzförmigen Öffnungen 15 wird u.a. auch erreicht, dass im Wesentlichen kein Verwinden der Schenkel 14.2 eintritt und die Federkraft des Sperrelementes 14 und damit die auf Greiferarme 5 ausgeübte Schließkraft also im Wesentlichen nur durch die Federarme 14.3 erzeugt wird.

Bei der Übergabe eines Behälters 2 an einem Behältergreifer 4 sowie bei der Entnahme eines Behälters 2 von einem Behältergreifer 4 befindet sich das jeweilige Sperrelement 14 in seiner freigebenden Position, in der die beiden Federarme 14.3 mit großer wirksamer Länge auf die Greiferarme 5 bzw. die Bolzen 13 einwirken. Die hierbei von den Federarmen 14.3 auf die Greiferarme 5 ausgeübte reduzierte Feder- oder Schließkraft reicht aus, um den jeweiligen Behälter 2 an einem Behältereinlauf der Transportvorrichtung 1 durch Einschnappen der Greiferarme 5 am Behälterhals sicher aufzunehmen, gleichzeitig aber auch am Behälterauslauf der Transportvorrichtung 1 ein Abnehmen der Behälter 2 zu ermöglichen, und zwar durch federndes Auseinanderbewegen der Greiferarme 5 gegen die Wirkung des Sperrelementes 14.

Nach der Aufnahme eines Behälters 2 wird das Sperrelement 14 gesteuert über die mit der wenigstens einen Steuerkurve zusammenwirkende Kurvenrolle 16 bezogen auf die Maschinenachse MA radial nach außen in die sperrende Position bewegt, so dass hierdurch die auf die Greiferarme 5 einwirkende wirksame Länge der Federarme 14.3 reduziert, die wirksame Federkonstante und/oder Federkraft, mit der die Federarme 14.3 auf die Greiferarme 5 einwirken, und dadurch die von den Federarmen 14.3 erzeugte Schließkraft deutlich erhöht werden. Durch Wahl der Sperrposition kann die Schließkraft des Behältergreifers 4 an aktuellen Gegebenheiten angepasst werden, beispielsweise an den Neck- oder Halsdurchmesser der Behälter 2. In jedem Fall ist aber die Schließkraft in diesem sperrenden Zustand des Behältergreifers 4 ausreichend groß, um auch bei schnell umlaufendem Transportelement 3 selbst gefüllte Behälter 2 sicher an dem jeweiligen Behältergreifer 4 zu halten.

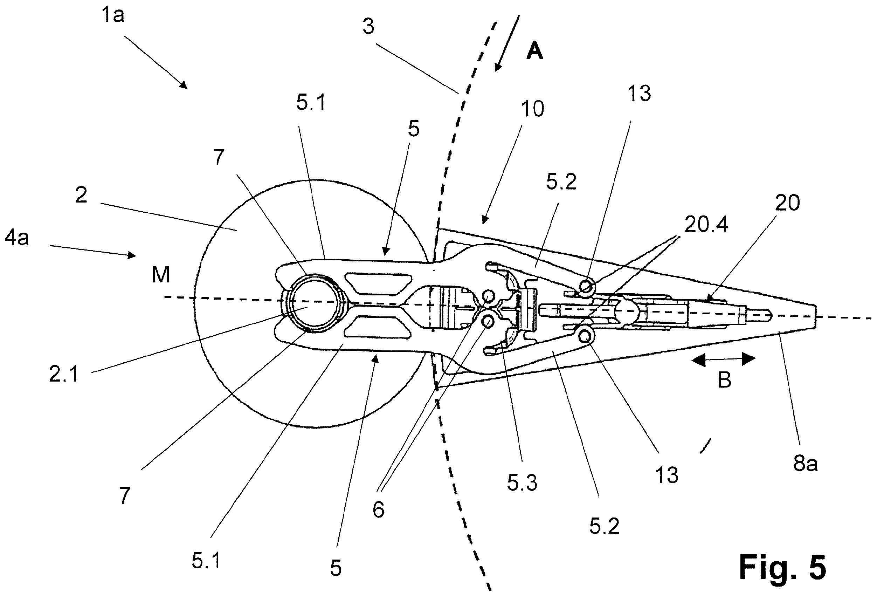

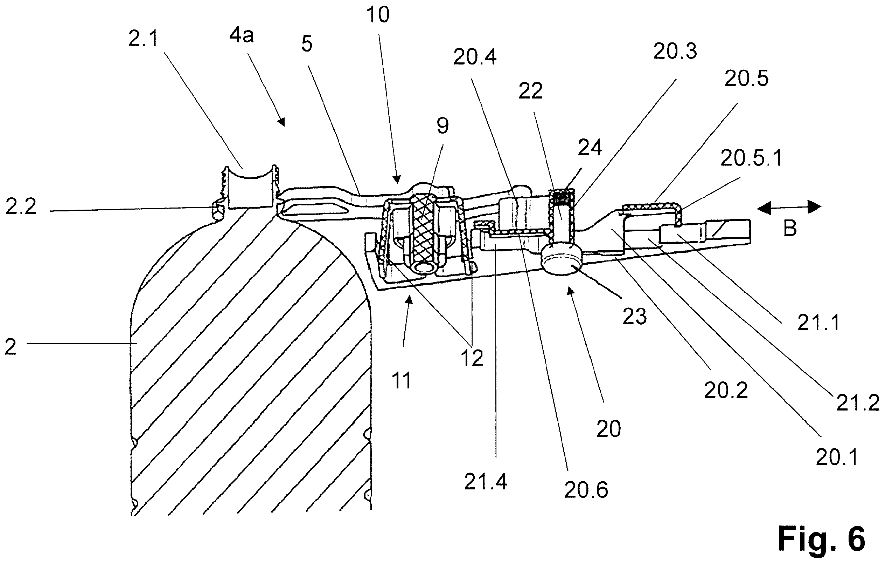

Die Fig. 5 - 8 zeigen als weitere Ausführungsform einen Behältergreifer 4a, der Bestandteil einer Transportvorrichtung 1a mit dem um die Maschinenachse MA umlaufenden Transportelement 3 ist, an dessen Umfang wiederum eine Vielzahl von Behältergreifern 4a vorgesehen ist. Der Behältergreifer 4a unterscheidet sich von dem Behältergreifer 4 der Fig. 1 - 4 grundsätzlich nur dadurch, dass anstelle des aus Federblech hergestellten Sperrelementes 14 ein Sperrelement 20 verwendet ist, welches als Formteil aus Kunststoff gefertigt ist. Weiterhin ist für jeden Behältergreifer 4a ein eigener Träger 8a vorgesehen, der für die rastende Befestigung einer Greifereinheit 10 ausgeführt ist.

Das Sperrelement 20, welches wiederum zur Änderung der auf die Greiferarme 5 ausgeübten Schließkraft entsprechend dem Doppelpfeil B radial zur Maschinenachse MA, d.h. in der Mittel- oder Symmetrieebene M des Behältergreifers 4a und der Greifereinheit 10 um den Bewegungshub zwischen der freigebenden Position und der sperrenden Position bewegbar ist, ist hierfür mit einer Basis 20.1 in einem Führungsschlitz 21 des Trägers 8a geführt.

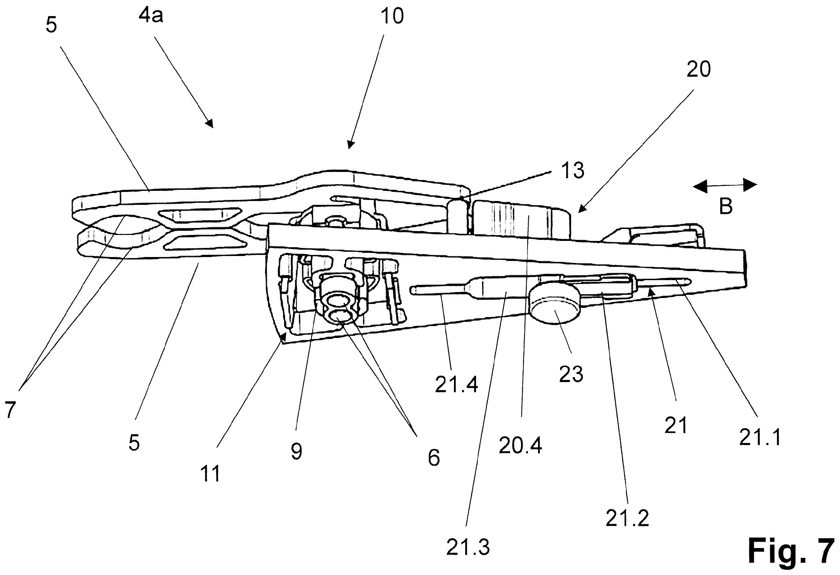

Der Führungsschlitz 21 ist mit seiner Längserstreckung radial zur Maschinenachse MA orientiert und besitzt eine Länge, die bei der dargestellten Ausführungsform größer ist als der Bewegungshub zwischen der freigebenden Position und der sperrenden Position. Wie insbesondere der Fig. 7 zu entnehmen ist, weist der Führungsschlitz 21 mehrere Abschnitte 21.1 - 21.4 unterschiedlicher Breite auf, die in der Reihenfolge der Wertigkeit ihrer Bezugsziffern in der Achsrichtung radial zur Maschinenachse MA auf einander folgen und in einander übergehen und von denen der Abschnitt 21.1 der Maschinenachse MA näher liegt als der Abschnitt 21.4.

An der Basis 20.1 sind Abwinklungen 20.2 vorgesehen, die den Rand des Führungsschlitzes 21 an der Unterseite des Trägers 8a hintergreifen und dadurch das Sperrelement 20 an dem Träger 8a sichern, und zwar ohne das Bewegen des Sperrelementes 20 entlang des Führungsschlitzes 21 zu behindern. Mit einem Lagerabschnitt 20.3 steht das Sperrelement 20 durch den Führungsschlitz 21 über die Oberseite des Trägers 8a vor und ist dort mit zwei Federzungen oder Federarmen 20.4 geformt, die hinsichtlich ihrer Funktion den Federarmen 14.3 entsprechen und bei montiertem Sperrelement 20 mit einem gewissen Abstand von der Oberseite des Trägers 8a oberhalb dieser Oberseite angeordnet sind. An dem den Federarmen 20.4 abgewandten und bezogen auf die Maschinenachse MA radial innen liegenden Ende ist an die Basis 20.1 ein als federnder Rastarm wirkender Abschnitt 20.5 angeformt, der an seinem freien Ende mit einer Abwinklung 20.5.1 versehen ist. Diese greift bei fertig montiertem Behältergreifer 4, 4a in den Abschnitt 21.1 des Führungsschlitzes 21 derart ein, dass die Abwinklung 20.5.1 beim Bewegen des Sperrelements 20 in Richtung auf die Maschinenachse MA schließlich gegen das geschlossene Ende des Abschnitts 21.1 zu Anlage kommt und dadurch die Position des Sperrelementes 20 mit der geringsten Schließkraft definiert und insbesondere auch verhindert, dass die Federarme 20.4 außer Eingriff mit den Bolzen 13 kommen.

Im fertig montierten Zustand des Behältergreifers 4a sind die Basis 20.1 in dem Abschnitt 21.2 und der Lagerabschnitt 20.3 in dem Abschnitt 21.3 des Führungsschlitzes 21 geführt. Die von dem Lagerabschnitt 20.3 in Richtung auf die Maschinenachse MA beabstandeten Abwinklungen 20.2 hintergreifen dabei den Rand des Abschnitts 21.2.

Im Lagerabschnitt 20.3 ist mittels eines Lagerbolzens 22 eine an diesem Lagerbolzen 22 befestigte Kurvenrolle 23 drehbar gelagert, die über die Unterseite des Trägers 8a vorsteht und analog zur Kurvenrolle 16 zum gesteuerten Bewegen des Sperrelementes 20 mit wenigstens einer ortsfesten Steuerkurve zusammenwirkt. In dem gezeigten Beispiel sind die Kurvenrolle 23 und der Lagerbolzen 22 einstückig ausgebildet. Der Lagerbolzen 22 ist in einer Ausnehmung des Lagerabschnitts 20.3 aufgenommen und in dieser Ausnehmung magnetisch, nämlich durch einen Permanentmagneten 24 gehalten.

An den Lagerabschnitt 20.3 ist eine stegartige Verlängerung 20.6 angeformt, die über die dem Abschnitt 20.5 abgewandte Seite des Lagerabschnitts 20.3 wegsteht. Bei fertig montiertem bzw. betriebsbereitem Behältergreifer 4a ist die Verlängerung 20.6 im Abschnitt 21.4 geführt und bildet einen mit dem Ende des Abschnitts 21.4 zusammen wirkenden Anschlag zur Begrenzung der Bewegung des Sperrelementes 20 bezogen auf die Maschinenachse MA radial nach außen.

Insbesondere bei vom Träger 8a abgenommener Greifereinheit 10 und bei noch nicht am Sperrelement 20 vorgesehener Kurvenrolle 23 kann das Sperrelement 20 einfach montiert werden, und zwar durch Einsetzen von der Oberseite des Trägers 8a her in den Führungsschlitz 21, wobei der Lagerabschnitt 20.3 und die die Abwinklungen 20.2 aufweisende Basis 20.1 zunächst in den Abschnitt 21.3 eingesetzt und anschließend das Sperrelement 20 soweit im Führungsschlitz 21 in Richtung auf die Maschinenachse MA hin verschoben wird, dass die Basis 20.1 in dem gegenüber dem Abschnitt 21.3 schmäleren Abschnitt 21.1 aufgenommen ist und die Abwinklungen 20.2 den Rand dieses Abschnittes hintergreifen. Im Anschluss daran wird die Kurvenrolle 23 mit ihrem Lagerbolzen 22 montiert.

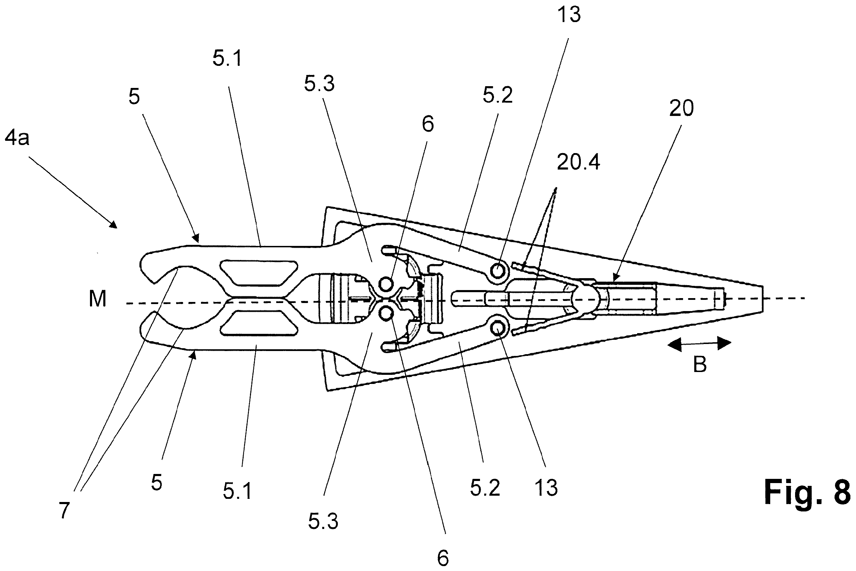

Für die weitere Montage des Behältergreifers 4a wird das Sperrelement 20 bezogen auf die Maschinenachse MA soweit radial nach innen bewegt, dass sich nach dem Einsetzen der Greifereinheit 10 das Sperrelement 20 in einer Position befindet, in der die Federarme 20.4 außer Eingriff mit den Greiferarmen 5 sind, wie dies in den Figuren 7 und 8 dargestellt ist. Die Abwinklung 20.5.1 befindet sich dabei außerhalb des Führungsschlitzes 21 und liegt gegen die Oberseite des Trägers 8a federnd an.

Aus diesem Zustand wird das Sperrelement 20 unter Zusammendrücken der Federarmen 20.4 und durch Verschieben bezogen auf die Maschinenachse MA radial nach außen so montiert, dass die beiden Federarme 20.4 dann in der erforderlichen Weise zwischen den Bolzen 13 der Gelenkarme 5 aufgenommen sind und sich gegen die Bolzen 13 sowie auch gegen die dem Träger 8a zugewandte Unterseite der Gelenkarme abstützen.

Die beiden Federarme 20.4 sind wiederum so ausgeführt, dass deren Oberflächenseiten in Ebenen parallel oder im Wesentlichen parallel zu den Achsen der Gelenkbolzen 6 und damit senkrecht oder im Wesentlichen senkrecht zur Ebene der Oberseite des Trägers 8a orientiert sind. Weiterhin sind die Federarme 20.4 bei dieser Ausführung ausgehend von dem Lagerabschnitt 20.3 divergierend in der Weise ausgeführt, dass der gegenseitige Abstand der Federarme 20.2 mit zunehmendem Abstand von dem Lagerabschnitt 20.3 zunimmt. Weiterhin ist das Sperrelement 20 so montiert, dass die freien Enden der Federarme 20.4 einen größeren radialen Abstand von der Maschinenachse MA aufweisen als derjenige Bereich, an dem der jeweilige Federarm 20.4 in den Lagerabschnitt 20.3 übergeht.

Es versteht sich, dass bei fertig montiertem Behältergreifer 4a die beiden Federarme 20.4 des Sperrelementes 20 ständig zwischen den beiden Bolzen 13 aufgenommen sind. Befindet sich das Sperrelement 20 dabei in einer Position, in der die beiden Federarme 20.4 eine große wirksame Länge aufweisen, d.h. die Bolzen 13 beispielsweise gegen die freien Enden der Federarme 20.4 anliegen, und hierfür das Sperrelement 20 bezogen auf die Maschinenachse MA radial nach innen in seine freigebende Position bewegt ist, so ergibt sich bei einer reduzierten wirksamen Federkräften der Federarme 20.4 eine reduzierte Schließkraft für den Behältergreifer 4a. Zur Erhöhung der Schließkraft wird das Sperrelement 20 bezogen auf die Maschinenachse MA radial nach außen in seine sperrende Position bewegt, so dass die wirksame Länge der Federarme 20.4, d.h. der Abstand derjenigen Federarmbereiche, gegen die die Bolzen 13 anliegen, von dem Lagerabschnitt 20.3 verkürzt wird, so dass über das federnde Sperrelement 20 bei einer erhöhten wirksamen Federkräften eine erhöhte Schließkraft auf die Greiferarme 5 ausgeübt wird, dabei kann auch die Vorspannung erhöht sein, was aber von der jeweiligen Geometrie abhängt.

Bei der Übergabe eines Behälters 2 an einem Behältergreifer 4a sowie bei der Entnahme eines Behälters 2 von einem Behältergreifer 4a befindet sich das Sperrelement 20 in seiner bezogen auf die Maschinenachse MA nach innen bewegten freigebenden Position, in der die beiden Federarme 20.4 eine reduzierte Schließkraft auf die Greiferarme 5 ausüben. Die hierbei von den Federarmen 20.4 auf die Greiferarme 5 ausgeübte reduzierte Feder- oder Schließkraft reicht aus, um den jeweiligen Behälter 2 an einem Behältereinlauf der Transportvorrichtung 1a durch Einschnappen der Greiferarme 5 am Behälterhals sicher aufzunehmen, gleichzeitig aber auch am Behälterauslauf der Transportvorrichtung 1a ein Abnehmen der Behälter 2 zu ermöglichen, und zwar durch federndes Auseinanderbewegen der Greiferarme 5 gegen die Wirkung des Sperrelementes 20.

Nach der Aufnahme eines Behälters 2 wird das Sperrelement 20 gesteuert über die mit wenigstens einer Steuerkurve zusammenwirkende Kurvenrolle 23 bezogen auf die Maschinenachse MA radial nach außen in die sperrende Position bewegt, so dass hierdurch die auf die Greiferarme 5 einwirkende wirksame Länge der Federarme 20.4 reduziert und dadurch durch die Federarme 20.4 eine erhöhte, die Greiferarme 5 in ihre schließende Position vorspannende und den Behälter 2 haltende Federkraft erzeugt wird. Durch Wahl der sperrenden Position kann die Schließkraft des Behältergreifers 4, 4a an aktuellen Gegebenheiten angepasst werden, beispielsweise an den Neck- oder Halsdurchmesser der Behälter 2. In jedem Fall ist aber die Schließkraft in diesem sperrenden Zustand des Behältergreifers 4a ausreichend groß, um auch bei schnell umlaufendem Transportelement 3 selbst gefüllte Behälter 2 sicher an dem jeweiligen Behältergreifer 4a zu halten.

Vorstehend wurde davon ausgegangen, dass die Greifereinheiten 10 und die Sperrelemente 14 bzw. 20 an einem Träger 8 bzw. 8a vorgesehen sind, der seinerseits an dem Transportelement 3 befestigt ist. Selbstverständlich können die Greifereinheiten 10 und die Sperrelemente 14 bzw. 20 auch unmittelbar dem Transportelement 3 vorgesehen sein, wobei die Träger 8 bzw. 8a beispielsweise Segmente dieses Transportelementes 3 sind.

Zur Erzeugung der sich mit dem Verschieben des Sperrelementes 14 bzw. 20 ändernden Schließkraft oder zur Unterstützung dieses Effekts ist es auch möglich, dass der jeweilige Federarm 14.3 oder 20.4 in Bewegungsrichtung B des Sperrelementes 14 bzw. 20 einen sich ändernden Material-Querschnitt aufweist und/oder so angeordnet ist, dass er in unterschiedlichen Positionen des Sperrelementes unterschiedlich stark elastisch verformt wird, beispielsweise auch in der sperrenden Position stärker als in der freigebenden Position, wobei zumindest eine Teillänge des jeweiligen Federarms mit der Achsrichtung der Schiebebewegung des Sperrelementes einen Winkel einschließt bzw. sich schräg zu der Achsrichtung der Schiebebewegung erstreckt.

### Bezugszeichenliste

- 1, 1a: Transportvorrichtung
- 2: Behälter
- 2.1: Behälteröffnung
- 2.2: Behälterflansch oder Neckring
- 3: Transportelement
- 4, 4a: Behältergreifer
- 5: Greiferarm
- 5.1 - 5.3: Greiferarmabschnitte
- 6: Gelenkbolzen
- 7: Ausnehmung
- 8, 8a: Träger
- 9: Lagerstück oder Aufnahme
- 10: Greifereinheit
- 11: Öffnungsanordnung
- 11.1 - 11.3: Öffnung
- 12: Flügel
- 13: Bolzen
- 14: Federndes Sperrelement
- 14.1: Basis
- 14.2: Schenkel
- 14.3: Federarm
- 15, 15.1: Schlitzförmige Öffnung
- 16: Kurvenrolle
- 17, 18: Öffnung
- 18.1: Befestigungselement
- 19: Gleitstück
- 20: Sperrelement
- 20.1: Basis
- 20.2: Abwinklung
- 20.3: Lagerabschnitt
- 20.4: Federarm
- 20.5, 20.6: Abschnitt
- 20.5.1: Abwinklung
- 21: Führungsschlitz
- 21.1 - 21.4: Abschnitt des Führungsschlitzes 21
- 22: Lagerbolzen
- 23: Kurvenrolle
- 24: Permanentmagnet
- A: Drehrichtung des Transportelementes 3
- B: Achsrichtung der Bewegung des Sperrelementes 14 bzw. 20
- M: Mittelebene
- MA: Maschinenachse

## Patentansprüche

1. Behältergreifer zum Greifen und Halten der Behälter (2) und zur Verwendung bei Transportvorrichtungen (1, 1a) zum Transportieren von Behältern (2) mit einem Transportelement (3) und mit mehreren an dem Transportelement (3) vorgesehenen Behältergreifern (4, 4a), wobei der Behältergreifer (4, 4a) wenigstens zwei schwenkbare Greiferarme (5), die jeweils durch wenigstens ein bügel- oder blattfederartiges Federelement (14.3, 20.4) in eine Schließstellung vorgespannt sind, sowie wenigstens ein Sperrelement (14, 20) aufweist, welches zwischen wenigstens einer, einen freigebenden Zustand des Behältergreifers (4, 4a) entsprechenden freigebenden Position, in der über die Federelemente (14.3, 20.4) eine reduzierte erste Schließkraft auf die Greiferarme (5, 5a) ausgeübt wird, und wenigstens einer einem sperrenden Zustand des Behältergreifers (4, 4a) entsprechenden sperrenden Position bewegbar ist, in der die Federelemente (14.3, 20.4) eine gegenüber der ersten Schließkraft erhöhte zweite Schließkraft auf die Greiferarme (5) ausüben, wobei die mit jeweils einer Steuerfläche (13) eines Greiferarms (5) zusammenwirkenden Federelemente am Sperrelement (14, 20) vorgesehen und derart ausgebildet sind, dass die jeweilige Steuerfläche (13) in der freigebenden Position des Sperrelementes (14, 20) gegen einen ersten Bereich des Federelementes (14.3, 20.4), an dem dieses eine reduzierte erste Federkraft entwickelt oder mit der reduzierten ersten Federkraft auf den Greiferarm (5) einwirkt, und in der sperrenden Position gegen einen zweiten gegenüber dem ersten versetzten Bereich des Federelementes (14.3, 20.4) anliegt, an dem dieses eine gegenüber der ersten erhöhte zweite Federkraft entwickelt oder mit der gegenüber der ersten erhöhten zweiten Federkraft auf den Greiferarm (5) einwirkt, **dadurch gekennzeichnet, dass** der erste und der zweite Bereich des Federelementes (14.3, 20.4) in der Achsrichtung der Bewegung (B) des Sperrelementes (14, 20) gegeneinander versetzt sind.

2. Behältergreifer (4, 4a) nach Anspruch 1, **dadurch gekennzeichnet, dass** das Sperrelement (14, 20) in einer Achsrichtung radial oder im Wesentlichen radial zu einer Schwenkachse der Greiferarme (5) zwischen der wenigstens einen freigebenden und der wenigstens einen sperrenden Position bewegbar ist.

3. Behältergreifer (4, 4a) nach einem der vorhergehenden Ansprüche 1 oder 2, **dadurch gekennzeichnet, dass** das Sperrelement (14, 20) wenigstens zwei Federelemente (14.3, 20.4) aufweist und/oder mit seinen Federelementen (14.3, 20.4) in einem Raum zwischen einander zugewandten Steuerflächen (13) der Greiferarme (5) angeordnet und bewegbar ist.

4. Behältergreifer (4, 4a) nach einem der vorhergehenden Ansprüche, **dadurch gekennzeichnet, dass** das Federelement eine Federzunge oder ein Federarm (14.3, 20.4) ist, der an einem Ende gehalten und am anderen Ende frei ist, wobei der erste Bereich jedes Federarmes (14.3, 20.4) einen größeren Abstand von dem einen Ende aufweist als der zweite Bereich des Federelementes (14.3, 20.4), und das Federelementin Bewegungsrichtung des Sperrelementes (14, 20) einen konstanten oder im Wesentlichen konstanten oder einen sich ändernden Querschnitt aufweist.

5. Behältergreifer (4, 4a) nach einem der vorhergehenden Ansprüche, **dadurch gekennzeichnet, dass** das Sperrelement (14, 20) einstückig mit seinen Federelementen (14.3, 20.4) aus einem metallischen Werkstoff, beispielsweise Federstahl, oder aus Kunststoff gefertigt ist.

6. Behältergreifer (4, 4a) nach einem der vorhergehenden Ansprüche, **dadurch gekennzeichnet, dass** das Sperrelement (14) U-Profilartig mit einer Basis (14.1) und zwei über eine gemeinsame Seite der Basis (14.1) wegstehenden abgewinkelten Schenkeln (14.2) ausgeführt ist, und dass an jedem Schenkel (14.2) wenigstens ein sich von diesem weg erstreckender Federarm (14.3) vorgesehen ist.

7. Behältergreifer (4, 4a) nach einem der vorhergehenden Ansprüche, **dadurch gekennzeichnet, dass** das Sperrelement an einer Basis (20.1) einen pfostenartig weg stehenden Abschnitt (20.3) aufweist, von dem sich die Federarme (20.4) weg erstrecken.

8. Behältergreifer (4, 4a) nach Anspruch 6 oder 7, **dadurch gekennzeichnet, dass** das Sperrelement (14, 20) mit seiner Basis (14.1, 20.1) und/oder mit seinen Schenkeln (14.2) an dem Transportelement (3) oder an einem am Transportelement (3) vorgesehenen Träger (8, 8a) geführt ist, beispielsweise in wenigstens einem Führungsschlitz (15, 15.1, 21).

9. Behältergreifer (4, 4a) nach einem der vorhergehenden Ansprüche, **dadurch gekennzeichnet,**
**dass** die Greiferarme (5) doppelhebelartig ausgebildet sind und jeder Greiferarm (5) zwischen seinen beiden Enden schwenkbar gelagert ist, dass die Greiferarme (5) an jeweils einem Ende eine Behälteraufnahme bilden und am anderen Ende die Steuerfläche (13) aufweisen, und/oder
**dass** die beiden an einer Aufnahme (9) schwenkbar gelagerten Greiferarme (5) zusammen mit dieser Aufnahme eine Bau- oder Greifereinheit (10) bilden, die vorzugsweise durch Verrasten im Transportelement (3) oder an einem dort vorgesehenen Träger (8, 8a) austauschbar befestigbar ist.

10. Behältergreifer (4, 4a) nach einem der vorhergehenden Ansprüche, **dadurch gekennzeichnet, dass** zur Steuerung des Bewegung des Sperrelementes (14, 20) an diesem ein mit einer Steuerkurve zusammenwirkender Mitnehmer, vorzugsweise in Form einer Kurvenrolle (16, 23) vorgesehen ist, wobei beispielsweise ein Lagerbolzen (22) der Kurvenrolle (23). in einem Lagerabschnitt (20.3) des Sperrelementes (20) magnetisch gehalten ist, z.B. durch wenigstens einen dort vorgesehenen Permanentmagneten (24).

11. Transportvorrichtung (1,1a) zum Transportieren von Behältern mit einem Transportelement (3) und mit mehreren an dem Transportelement (3) vorgesehenen Behältergreifern (4, 4a), **dadurch gekennzeichnet, dass** die Behältergreifer (4, 4a) nach einem der vorhergehenden Ansprüche ausgebildet sind.

12. Transportvorrichtung (1,1a) nach Anspruch 11, **dadurch gekennzeichnet, dass** bei einem um eine Maschinenachse (MA) umlaufend antreibbaren Transportelement (3) die Sperrelemente (14, 20) in einer Achsrichtung radial oder im Wesentlichen radial zur Maschinenachse (MA) zwischen der wenigstens einen freigebenden Position und der wenigstens einen sperrenden Position bewegbar sind.

## Claims

1. Container gripper for gripping and holding containers (2) and for use with transport devices (1, 1a) for the transporting of containers (2) comprising a transport element (3) and with a plurality of container grippers (4, 4a) provided at the transport element (3), wherein the container gripper (4, 4a) comprises at least two pivotable gripper arms (5), which in each case are subjected to preliminary tension, in each case by at least one spring element (14.3, 20.4) in the form of a bar spring or leaf spring, into a closed position, as well as at least one blocking element (14, 20), which can be moved between at least one releasing position, corresponding to a releasing state of the container gripper (4, 4a), in which a reduced first closure force is exerted by the spring elements (14.3, 20.4) onto the gripper arms (5, 5a), and at least one blocking position, corresponding to a blocking state of the container gripper (4, 4a), in which the spring elements (14.3, 20.4) exert a closure force onto the gripper arms (5) which is increased in relation to the first closure force, wherein the spring elements, interacting in each case with a control surface (13) of a gripper arm (5), are provided at the blocking element (14,20) and are configured in such a way that the respective control surface (13), in the releasing position of the blocking element (14, 20), takes effect against a first region of the spring element (14.3, 20.4), on which it develops a reduced first spring force, or takes effect with the reduced first spring force on the gripper arm (5), and in the blocking position is in contact against a second region of the spring element (14.3, 20.4), opposite the first offset region, and there develops a spring force which is increased in relation to the first, or takes effect on the gripper arm (5) with a second spring force which is increased in relation to the first, **characterised in that** the first and second region of the spring element (14.3, 20.4) are offset against one another in the axial direction of movement (B) of the blocking element (14,20).

2. Container gripper (4, 4a) according to claim 1, **characterised in that** the blocking element (14, 20) can be moved in an axial direction radially or essentially radially to a pivot axis of the gripper arms (5) between the at least one releasing position and the at least one blocking position.

3. Container gripper (4, 4a) according to any one of the preceding claims 1 or 2, **characterised in that** the blocking element (14, 20) comprises at least two spring elements (14.3, 20.4), and/or is arranged with its spring elements (14.3, 20.4) in a space between control surfaces (13), facing one another, of the gripper arms (5), and is movable.

4. Container gripper (4, 4a) according to any one of the preceding claims, **characterised in that** the spring element is a spring tongue or a spring arm (14.3, 20.4), which is held at one end and is free at the other end, wherein the first region of each spring arm (14.3, 20.4) exhibits a greater spacing interval from the one end than the second region of the spring element (14.3, 20.4), and the spring element, in the movement direction of the blocking element (14, 20), exhibits a cross-section which is constant or essentially constant or changing.

5. Container gripper (4, 4a) according to any one of the preceding claims, **characterised in that** the blocking element (14, 20) is produced as one piece with its spring elements (14.3, 20.4) and made of a metallic material, for example spring steel, or from a plastic.

6. Container gripper (4, 4a) according to any one of the preceding claims, **characterised in that** the blocking element (14) is configured in the form of a U-profile, with a base (14.1) and two angled limbs (14.2) projecting over a common side of the base (14.1), and that at each limb (14.2) at least one spring arm (14.3) is provided, extending away from the limb.

7. Container gripper (4, 4a) according to any one of the preceding claims, **characterised in that** the blocking element exhibits at a base (20.1) a section (20.3) projecting in the form of a post, from which the spring arms (20.4) extend away.

8. Container gripper (4, 4a) according to claim 6 or 7, **characterised in that** the blocking element (14, 20) is guided by its base (14.1, 20.1) and/or by its limbs (14.2) at the transport element (3) or at a carrier (8, 8a) provided at the transport element (3), for example in at least one guide slot (15, 15.1, 21).

9. Container gripper (4, 4a) according to any one of the preceding claims, **characterised in that** the gripper arms (5) are configures in the form of a double lever, and each gripper arm (5) can be mounted such as to be pivotable between it two ends, that the gripper arms (5) in each case form at one end a container receiver, and at the other end exhibit the control surface (13), and/or
that the two gripper arms (5), mounted so as to pivot at a receiver (9), form together with this receiver a structural or gripper unit (10), which preferably can be secured by locking engagement in the transport element (3), or can be exchanged at a carrier (8, 8a) provided there.

10. Container gripper (4, 4a) according to any one of the preceding claims, **characterised in that**, for the controlling of the movement of the blocking element (14, 20), provided at this element is a driver element which interacts with a control curve, preferably in the form of a curve roller (16, 23), wherein, for example, a bearing bolt (22) of the curve roller (23) is held magnetically in a bearing section (20.3) of the blocking element (20), for example by means of at least one permanent magnet (24) provided there.

11. Transport device (1, 1a) for transporting containers, with a transport element (3) and with a plurality of container grippers (4, 4a) provided at the transport element (3), **characterised in that** the container grippers (4, 4a) are configured in accordance with any one of the preceding claims.

12. Transport device (1, 1a) according to claim 11, **characterised in that**, with a transport element (3) which can be driven such as to circulate about a machine axis (MA), the blocking elements (14, 20) can be moved, in an axial direction radially or essentially radially to the machine axis (MA), between the at least one releasing position and the at least one blocking position.

## Revendications

1. Préhenseur à récipient pour saisir et tenir les récipients (2) et à utiliser pour des dispositifs de transport (1, 1a) pour le transport de récipients (2) avec un élément de transport (3) et avec plusieurs préhenseurs à récipient (4, 4a) prévus au niveau de l'élément de transport (3), dans lequel le préhenseur à récipient (4, 4a) présente au moins deux bras préhenseurs pivotants (5), qui sont précontraints dans une position de fermeture respectivement par au moins un élément ressort de type étrier ou ressort à lame (14.3, 20.4), ainsi qu'au moins un élément de blocage (14, 20), lequel est mobile entre au moins une position de libération correspondant à un état de libération du préhenseur à récipient (4, 4a), dans laquelle une première force de fermeture réduite est exercée sur les bras préhenseurs (5, 5a) par le biais des éléments ressort (14.3, 20.4), et au moins une position de blocage correspondant à un état de blocage du préhenseur à récipient (4, 4a), dans laquelle les éléments ressort (14.3, 20.4) exercent sur les bras préhenseurs (5) une deuxième force de fermeture accrue par rapport à la première force de fermeture, dans lequel les éléments ressort coopérant avec respectivement une surface de commande (13) d'un bras préhenseur (5) sont prévus au niveau de l'élément de blocage (14, 20) et réalisés de sorte que la surface de commande respective (13) s'applique dans la position de libération de l'élément de blocage (14, 20) contre une première zone de l'élément ressort (14.3, 20.4), au niveau de laquelle celui-ci développe une première force de ressort réduite ou agit avec la première force de ressort réduite sur le bras préhenseur (5), et dans la position de blocage contre une deuxième zone de l'élément ressort (14.3, 20.4) décalée par rapport à la première, au niveau de laquelle celui-ci développe une deuxième force de ressort accrue par rapport à la première ou agit avec la deuxième force de ressort accrue par rapport à la première sur le bras préhenseur (5), **caractérisé en ce que** la première et la deuxième zone de l'élément ressort (14.3, 20.4) sont décalées l'une par rapport à l'autre dans la direction axiale du mouvement (B) de l'élément de blocage (14, 20).

2. Préhenseur à récipient (4, 4a) selon la revendication 1, **caractérisé en ce que** l'élément de blocage (14, 20) est mobile dans une direction axiale radialement ou sensiblement radialement par rapport à un axe de pivotement des bras préhenseurs (5) entre l'au moins une position de libération et l'au moins une position de blocage.

3. Préhenseur à récipient (4, 4a) selon l'une quelconque des revendications précédentes 1 ou 2, **caractérisé en ce que** l'élément de blocage (14, 20) présente au moins deux éléments ressort (14.3, 20.4) et/ou est agencé et mobile avec ses éléments ressort (14.3, 20.4) dans un espace entre des surfaces de commande (13) des bras préhenseurs (5) tournées l'une vers l'autre.

4. Préhenseur à récipient (4, 4a) selon l'une quelconque des revendications précédentes, **caractérisé en ce que** l'élément ressort est une languette ressort ou un bras ressort (14.3, 20.4), qui est retenu à une extrémité et libre à l'autre extrémité, dans lequel la première zone de chaque bras ressort (14.3, 20.4) présente une plus grande distance par rapport à l'une extrémité que la deuxième zone de l'élément ressort (14.3, 20.4), et l'élément ressort présente dans la direction de déplacement de l'élément de blocage (14, 20) une section transversale constante ou sensiblement constante ou variable.

5. Préhenseur à récipient (4, 4a) selon l'une quelconque des revendications précédentes, **caractérisé en ce que** l'élément de blocage (14, 20) est fabriqué d'un seul tenant avec ses éléments ressort (14.3, 20.4) en un matériau métallique, par exemple acier à ressort, ou en plastique.

6. Préhenseur à récipient (4, 4a) selon l'une quelconque des revendications précédentes, **caractérisé en ce que** l'élément de blocage (14) est réalisé en profil en U avec une base (14.1) et deux branches (14.2) coudées et éloignées sur une face commune de la base (14.1), et qu'au niveau de chaque branche (14.2), au moins un bras ressort (14.3) s'éloignant de celle-ci est prévue.

7. Préhenseur à récipient (4, 4a) selon l'une quelconque des revendications précédentes, **caractérisé en ce que** l'élément de blocage présente au niveau d'une base (20.1) une section s'éloignant en forme de poteau (20.3), de laquelle les bras ressort (20.4) s'éloignent.

8. Préhenseur à récipient (4, 4a) selon la revendication 6 ou 7, **caractérisé en ce que** l'élément de blocage (14, 20) est guidé avec sa base (14.1, 20.1) et/ou avec ses branches (14.2) au niveau de l'élément de transport (3) ou au niveau d'un support (8, 8a) prévu au niveau de l'élément de transport (3), par exemple dans au moins une fente de guidage (15, 15.1, 21).

9. Préhenseur à récipient (4, 4a) selon l'une quelconque des revendications précédentes, **caractérisé en ce**
**que** les bras préhenseurs (5) sont réalisés sous forme de double levier et chaque bras préhenseur (5) est logé de manière pivotante entre ses deux extrémités, que les bras préhenseurs (5) forment respectivement au niveau d'une extrémité un logement de récipient et présentent la surface de commande (13) à l'autre extrémité, et/ou
**que** les deux bras préhenseurs (5) logés de manière pivotante au niveau d'un logement (9) forment conjointement avec ce logement une unité de construction ou de préhension (10), qui peut être fixée de manière interchangeable de préférence par encliquetage dans l'élément de transport (3) ou au niveau d'un support (8, 8a) qui y est prévu.

10. Préhenseur à récipient (4, 4a) selon l'une quelconque des revendications précédentes, **caractérisé en ce que** pour la commande du mouvement de l'élément de blocage (14, 20), il est prévu au niveau de celui-ci un élément d'entraînement coopérant avec une came de commande, de préférence sous forme de rouleau de came (16, 23), dans lequel par exemple un axe de palier (22) du rouleau de came (23) est retenu magnétiquement, par exemple par au moins un aimant permanent (24) qui y est prévu dans une section de palier (20.3) de l'élément de blocage (20).

11. Dispositif de transport (1, 1a) pour le transport de récipients avec un élément de transport (3) et avec plusieurs préhenseurs à récipient (4, 4a) prévus au niveau de l'élément de transport (3), **caractérisé en ce que** les préhenseurs à récipient (4, 4a) sont réalisés selon l'une quelconque des revendications précédentes.

12. Dispositif de transport (1, 1a) selon la revendication 11, **caractérisé en ce que** pour un élément de transport (3) pouvant être entraîné en rotation autour d'un axe de machine (MA), les éléments de blocage (14, 20) sont mobiles dans une direction axiale radialement ou sensiblement radialement par rapport à l'axe de machine (MA) entre l'au moins une position de libération et l'au moins une position de blocage.
